# EUROPÄISCHE PATENTSCHRIFT

(11) **EP 0 601 679 B1**
(45) Veröffentlichungstag und Bekanntmachung des Hinweises auf die Patenterteilung: **09.06.1999**
(21) Anmeldenummer: 93250332.9
(22) Anmeldetag: 02.12.1993
(51) Int. Cl.: G06K 1/12, G06K 19/08

(54) **Verfahren zur Kennzeichnung eines Gegenstands**
Object marking method
Procédé de marquage d'un objet

(30) Priorität: 04.12.1992 DE 4241663
(43) Veröffentlichungstag der Anmeldung: 15.06.1994
(73) Patentinhaber: BORUS SPEZIALVERFAHREN UND- GERÄTE IM SONDERMASCHINENBAU GmbH, D-12459 Berlin (DE)
(72) Erfinder: Fisun, Oleg Ivanovich, 119034 Moskau (RU); Lupichev, Lev Nikolaevich, 119034 Moskau (RU); Maklakov, Viktor Vassilevich, 119034 Moskau (RU); Schimko, Richard, D-10179 Berlin (DE)
(74) Vertreter: Christiansen, Henning

(56) Entgegenhaltungen:
- EP-A- 0 157 546
- EP-A- 0 411 602
- EP-A- 0 467 067
- US-A- 3 486 006
- US-A- 3 760 161

## Beschreibung

Die Erfindung betrifft ein Verfahren der im Oberbegriff des Anspruchs 1 angegebenen Art sowie eine Vorrichtung zur Durchführung des Verfahrens.

Es ist bekannt, Gegenstände mit optisch lesbaren Informationen zu versehen, sei es, daß diese der Identifizierung dienen oder daß sie zusätzliche Informationen beinhalten, welche in Zusammenhang mit dem betreffenden Gegenstand von Nutzen sind.

Die Informationsmuster werden durch Bedrucken und/oder Bekleben an geeigneter Stelle auf dem mit der Information zu versehenden Gegenstand positioniert.

Aus der FR-PS 2 560 119 ist insbesondere ein Verfahren bekannt, das mittels eines sogenannten Stream-Laserkopfes arbeitet. Dabei gelangt der zu markierende Gegenstand mittels eines Transportbandes vor den Stream-Laserdruckkopf. Mittels einer mikroprozessorgesteuerten Vorrichtung wird der Laserkopf zur sequentiellen Erzeugung eines vorgegebenen Schreibmusters positioniert und geführt. Dabei werden beispielsweise eine Anzahl von vorgegebenen Buchstaben und Ziffern nach ihren Koordinaten in ihrer Lage vorgegeben. Drei Photoelemente kontrollieren dabei die Position des zu kennzeichnenden Gegenstandes auf dem Fließband. Wenn dieser eine vorgebene Position erreicht hat, schaltet sich der Stream-Laserdruckkopf ein und trägt die Markierungszeichen punktweise auf Oberflächenmaterial auf. Eine Rastermatrix besteht dabei beispielsweise aus dreißig horizontalen und dreißig vertikalen Punkten. Ein nachgeschaltetes Lesegerät kontrolliert anschließend die Qualität der angebrachten Markierungszeichen.

Ein weiteres Verfahren dient zum Schutz von Geldscheinen und Wertpapieren vor Fälschungen und ist aus der CH-PS 569 333 bekannt. Dieses Verfahren beruht darauf, daß auf die Materialoberfläche eine fluoreszierende Substanz in einer vorbestimmten Konzentration aufgetragen wird. Hierbei kann es sich sowohl um einzelne Bereiche als auch um die gesamte Oberfläche des Scheins oder Papiers handeln. Bei der späteren Beleuchtung eines derart behandelten Materials mit Strahlung einer vorgegebenen Wellenlänge, wird ein Aufleuchten der fluoreszierenden Substanz in einem charakteristischem Bereich innerhalb des sichtbaren oder ultravioletten Teils des Spektrums erzeugt.

Ein anderes Verfahren zum verschlüsselten Schutz und zur individualisierenden Identifizierung von Dokumenten, die eine Vervielfältigung auf Kopiergeräten ausschließt, basiert auf der Anwendung von speziellen Farbstoffen mit hohem Reflexionsvermögen in einem vorgegebenen Teil des Spektrums und ist aus der US-PS 3 852 088 bekannt. Der gewählte spektrale Bereich ist hierbei charakteristisch für einen bestimmten Typ von elektrostatischen Kopiergeräten, so daß diese Farbe bei normaler Betrachtung nicht besonders in Erscheinung tritt, nach dem Kopieren mittels eines Kopiergeräts auf der Kopie aber deutlich hervortritt. Dabei absorbiert der Farbstoff aber zum Teil Strahlung anderer Wellenlängen, die für Kopiergeräte anderen Typs charakteristisch sind, so daß hier die Schutzwirkung herabgesetzt ist. Zum anderen kann die Farbe des Dokumentenpapiers so gewählt werden, daß es durch eine spezielle Markierungsfarbe maskiert ist. Alle diese Maßnahmen führen dazu, daß beim Kopieren des Dokumentes die Markierungszeichen unter bestimmten Bedingungen nicht wiedergegeben werden.

Aus der DE 38 39 772 Al ist ein Strichcode-Lesesystem und ein entsprechendes Strichcode-System bekannt, bei dem mindestens zwei übereinander angeordnete und/oder sich kreuzende Strichcodes Verwendung finden. Bei diesem System, das zur Erhöhung der Informationsdichte auf einer begrenzten Kennzeichnungsfläche dient, können auch bei verschiedenen Wellenlängen arbeitende Kennzeichnungs- und Leseeinrichtungen zum Einsatz kommen.

Aus der DE 41 26 626 A1 ist es bekannt, Materialkörper (hier insbesondere Glasflaschen) unter ihrer Oberfläche mit Markierungen in Form eines Gebietes erhöhter Undurchlässigkeit für elektromagnetische Strahlungen zu versehen. Dabei wird ein hochenergetischer Strahl auf den Gegenstand gerichtet und auf einen Punkt fokussiert, der unterhalb dessen Oberfläche liegt, so daß dort eine lokalisierte Ionisierung des Materials bewirkt wird. Wenn das Material im sichtbaren Bereich für elektromagnetische Strahlung undurchlässig ist, ist eine derartige Markierung für das unbewaffnete Auge verborgen, kann jedoch mit technischen Hilfsmitteln wahrgenommen werden.

Aus der EP-A-0 467 067 ist ein Verfahren bekannt, das auf Druckträger in der Weise Informationsschichten aufbringt, daß eine Schicht ohne weiteres lesbare Informationen in Wort und Bild beinhaltet, während die andere Schicht Informationen nicht oder nur sehr schwierig lesbar beinhaltet. Eine der Schichten ist mit einem Klarlack aufgetragen und bei sichtbarem Licht für das menschliche Auge nicht oder fast nicht wahrnehmbar, während eine zweite Schicht über oder unter der ersten befindlich aufgedruckt ist, die eine Eigenabsorption im sichtbaren Spektralbereich aufweist. Durch eine geeignete Wahl der Eigenabsorptionsbereiche wird es möglich, daß die Informationen auch genau übereinanderliegen können, ohne daß die sichtbaren Informationen die - z.B. darunterliegenden, nicht sichtbaren - Informationen beeinträchtgen. Vorzugsweise ist beim Einsatz dieser Erfindung an Zeitungen und Zeitschriften gedacht worden, wie z.B. Fernsehzeitschriften für mit Infrarotstift lesbaren Eintragungen, die für die Videorecorderprogrammierung geeignet sind.

Aus der US-A-3 760 161 ist ebenfalls eine zweiteilige, in sichtbare und nicht sichtbare Informationen aufgeteilte, Art der Informationseinbringung bekannt. Es wird ein Verfahren und eine Methode beschrieben, um Dokumente sowohl für Menschen als auch für Maschinen lesbar zu machen und die genannten Dokumente, wie z.B. Schecks, maschinell sortierbar zu gestalten. Die nicht sichtbare Information ist so aufgebracht, daß sie unter UV-Licht auswertbar ist. Die Informationen werden aus Gründen der maschinellen Bearbeitbarkeit und Möglichkeit der Dateneinordnung auf die Oberfläche aufgebracht, wobei der nicht sichtbare Teil des Datensatzes nicht notwendigerweise ein anderer sein muß, als der ohnehin sichtbare.

Den beiden vorgenannten Lösungen liegt nicht als Ziel zugrunde, Sicherheit gegen Fälschung bzw. Verifikation von Echtheit zu ermöglichen. Das primäre Ziel, welches beiden gemeinsam ist, besteht darin, die Voraussetzungen zu schaffen, nicht nur dem Menschen lesbare Informationen zu vermitteln, sondern auch (möglichst ohne Beeinträchtigung der wechselseitigen Lesbarkeit jeweils für Mensch oder Maschine) Lesbarkeit für letztere herzustellen.

Allen vorgenannten Verfahren gemeinsam ist, daß derartige Muster nicht in genügendem Maße fälschungssicher ausgebildet sind, d.h., daß diese Muster nachgeahmt oder verändert werden können, wobei es in der Regel ausreichend ist, ein vorhandenes Muster von einem anderen (echten oder authentisch gekennzeichneten) Gegenstand zu übernehmen. Auch die Drucktechnik macht dabei üblicherweise keine Schwierigkeiten, da nach üblichen Drucktechniken arbeitende Geräte üblicherweise frei erhältlich sind.

Der Erfindung liegt die Aufgabe zugrunde, ein Verfahren der eingangs genannten Gattung, welches eine verdeckte Kennzeichnung ohne besondere chemische oder mechanische Vorbehandlung auf nahezu beliebigen nichtmetallischen Gegenständen zuläßt, bereitzustellen, damit eine erhöhte Fälschungssicherheit zu ermöglichen, und eine Vorrichtung zu dessen Durchführung anzugeben.

Diese Aufgabe wird mit den kennzeichnenden Merkmalen der Ansprüche 1 und 15 gelöst.

Die Erfindung schließt die Erkenntnis ein, daß durch Aufteilen der kennzeichnenden Markierung eines Gegenstandes in zwei Informationsmuster mit unterschiedlicher Erkennbarkeit, wobei die für die Identifikation des Gegenstandes wesentliche Information in einem nicht sichtbaren Informationsmuster enthalten ist, eine erhebliche Erhöhung der Fälschungssicherheit erreichbar ist, da über deren Vorhandensein und Informationsgehalt Unbefugte im Ungewissen sind und durch Manipulation der sichtbaren Kennzeichnung allein keine wirksame Verfälschung möglich ist.

Bei einer vorteilhaften Weiterbildung der Erfindung ist es günstig, daß allein durch physikalische Veränderung der optischen Eigenschaften des zu behandelnden Materials im nicht sichtbaren Bereich des optischen Spektrums in verschiedenen Materialien ohne Veränderung ihrer physikochemischen Struktur Informationen aufweisende Muster erzeugbar sind, welche unter dem Einfluß äußerer Faktoren nicht zerstört werden können und ohne technische Hilfsmittel für das menschliche Auge nicht sichtbar sind. Das Verfahren erzeugt dabei mit herkömmlichen Mitteln nicht kopierfähige Markierungen auf Gegenständen mittels kohärenter, hochintensiver, impulsförmiger Strahlung, welche auch mit üblichen Mitteln nicht manipulierbar sind.

Bei einer vorteilhaften Weiterbildung des erfindungsgemäßen Verfahrens ist es insbesondere günstig, daß weder die Materialoberfläche des zu behandelnden Gegenstands noch dessen Struktur beschädigt werden. Damit ist einerseits der Vorteil verbunden, daß das erste, bei sichtbarem Licht nicht sichtbare Informationsmuster an einem beliebigen, in der Nähe des zweiten bei diesem Licht sichtbaren Informationsmusters befindlichen Ort plaziert werden kann. Das sichtbare Informationsmuster täuscht eine mit Fälschungsabsichten befaßte Person über das Vorliegen einer weiteren Markierung und sichert somit die in dem unsichtbaren Informationsmuster vorhandene Kennzeichnung zusätzlich.

Insbesondere wird die Markierung des Gegenstandes mit einem unsichtbaren Muster mittels hochenergetischer Impulsstrahlung erzeugt, wobei die Bestrahlung mit einer Wellenlange im Bereich von 250 bis 450 nm erfolgt. Durch Variation der Ladespannung, der Impulsfolgefrequenz, der lokalen Verweildauer bzw. Schreibgeschwindigkeit und/oder des Spotdurchmessers des Laserstrahls wird dessen Strahlungsenergie derart eingestellt, daß die lokale Bestrahlungsmenge einen zur Erzielung einer bleibenden Kennzeichnung notwendigen Schwellwert überschreitet, wobei gleichzeitig das Integral der in Wärme umgewandelten Energie derart eingestellt wird, daß unter Berücksichtigung der Wärmeabfuhr die lokale Erwärmung unterhalb einer Temperatur bleibt, bei der eine wesentliche bleibende Verformung oder sonstige Veränderung des Materials des zu behandelnden Gegenstands eintritt.

Die so erzeugte Kennzeichnung, die aus einem bei sichtbarem Licht unsichtbaren Muster besteht, wird dann in vorteilhafter Weise mittels eines Beleuchtungssystems mit der Lichtwellenlänge nahe der Resonanzabsorptionswellenlänge des markierten Materials sichtbar gemacht bzw. ausgelesen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine bevorzugte Ausführungsform der verfahrensgemäß verwendeten Vorrichtung zur Kennzeichnung und Identifikation eines Gegenstandes in schematischer Darstellung,
Figur 2 die schematisierte Darstellung einer vorteilhaften Anordnung von Informationsmustern nach dem erfindungsgemäßen Verfahren,
Figuren 3 bis 7 vorteilhafte Weiterbildungen der in Figur 2 gezeigten Darstellung,
Figur 8 ein Ausführungsbeispiel einer Vorrichtung zur Durchführung des erfindungsgemäßen Verfahrens im Blockschaltbild,
Figur 9 eine vorteilhafte Weiterbildung der in Figur 8 dargestellten Vorrichtung sowie
Figur 10 eine andere günstige Weiterbildung der in Figur 8 dargestellten Vorrichtung.

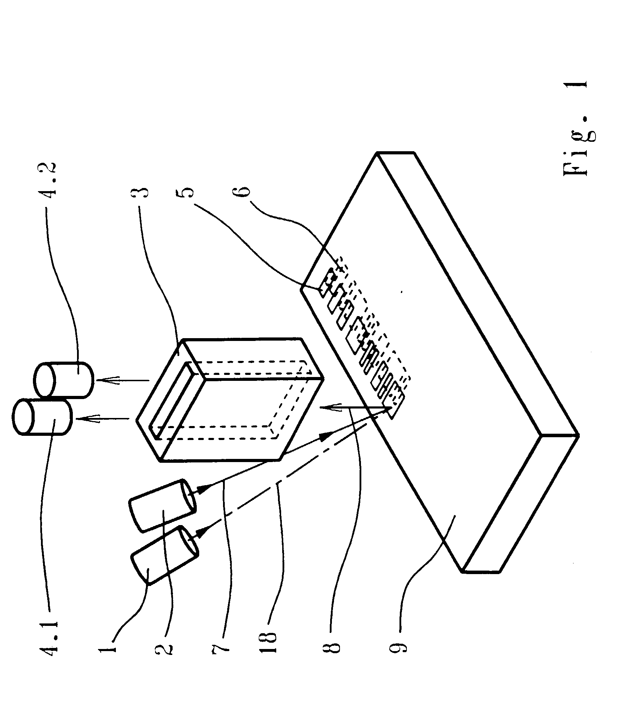

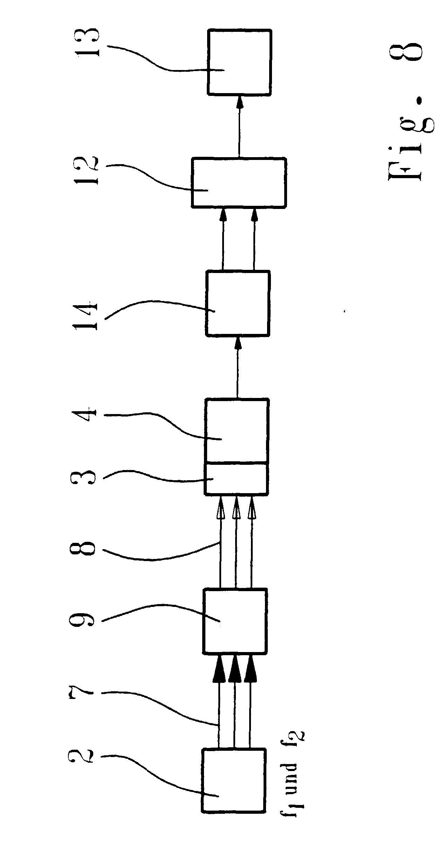

Die in Figur 1 in perspektivischer Ansicht dargestellte Vorrichtung zur Kennzeichnung und Wiedererkennung eines verfahrensgemäß gekennzeichneten Gegenstandes 9 besteht im wesentlichen aus einer Strahlungsquelle 1 zur Erzeugung eines ersten nicht sichtbaren Informationsmusters 6 durch Bestrahlen der Oberfläche des zu kennzeichnenden Gegenstandes 9 im Markierungsbereich mit energiereichem Laserlicht mit einer Wellenlänge nahe der Resonanzwellenlänge (maximale spektrale Absorption), einer auch den ultravioletten Lichtbereich erfassenden Beleuchtungseinrichtung 2 zur Sichtbarmachung des ersten, bei sichtbarem Licht unsichtbaren, Informationsmusters 6, einem optischen System 3 zur Aufbereitung der von den beiden Mustern 5, 6 bei Beleuchtung mit einem Lichtstrahl 7 bestimmter Wellenlänge reflektierten Lichts 8, zwei Strahlungsdetektoren 4.1, 4.2 mit unterschiedlichen Resonanzfrequenzen und (in den Figuren 8 bis 10 dargestellten) elektronischen Mitteln zur Auswertung der durch die Detektoren 4.1, 4.2 aufgenommenen optischen Signale.

Das Aufbringen des zweiten, bei sichtbarem Licht im Wellenlängenbereich von 380 bis 760 nm, sichtbaren Informationsmusters 5 erfolgt durch Bekleben, Bedrucken oder durch bleibende mechanische Verformung der Oberfläche des zu kennzeichnenden Gegenstandes 9. Das bei sichtbarem Licht unsichtbare Informationsmuster 6 wird durch Bestrahlung des zu kennzeichnenden Gegenstandes 9 mit Licht einer Wellenlänge in der Nähe der maximalen spektralen Absorption des Materials, aus dem der Gegenstand 9 besteht, erzeugt und in der Nähe des sichtbaren Informationsmusters 5 plaziert.

Das Auslesen der in den Mustern 5, 6 enthaltenen Informationen erfolgt mit einer breitbandigen Beleuchtungseinrichtung 2 in einem Lesezyklus. Eine, mit zwei verschiedenen Wellenlängenbereichen arbeitende Beleuchtungseinrichtung 2 erfordert dagegen zwei Lesezyklen mit einer jeweils unterschiedlichen, auf das jeweilige Informationsmuster 5, 6 abgestimmten Wellenlänge (λ₁ = 1/f₁ bzw. λ₂ = l/f₂) . Die Wellenlänge λ₂ liegt dabei im ultravioletten Bereich des Lichtes. Beim Auslesen werden die Beleuchtungseinrichtung 2 und der verfahrensgemäß gekennzeichnete Gegenstand relativ zueinander bewegt.

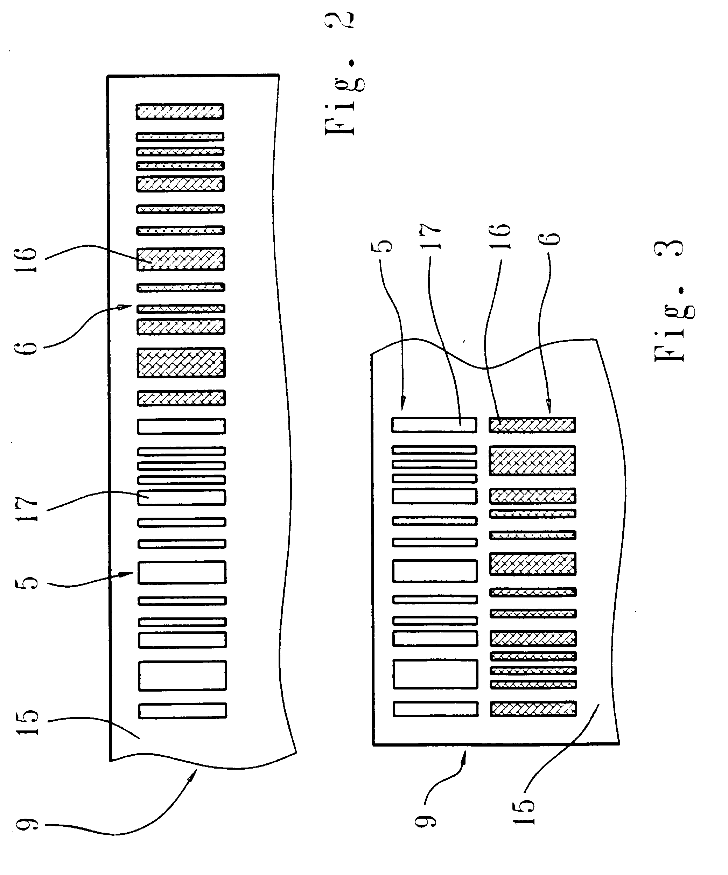

Die Möglichkeiten einer vorteilhaften Anordnung der beiden unterschiedlich erkennbaren Informationsmuster 5, 6 ist in den Figuren 2 bis 7 in schematisierter Form dargestellt. Danach ist es günstig, die beiden Informationsmuster 5, 6 in einer Ebene auf der Oberfläche 15 des zu kennzeichnenden Gegenstandes 9 anzuordnen. Die Informationsmuster 5, 6 sind vorzugsweise als Strich-Codes 16, 17 ausgebildet und sind entweder nebeneinander in Reihe liegend (Figur 2) oder parallelliegend übereinander (Figur 3) angeordnet. Dabei ist es in günstiger Weise möglich, daß die Strich-Code-Elemente 17 des sichtbaren Informationsmusters 5 mit den entsprechenden Code-Elementen 16 des nur bei Beleuchtung mit ultraviolettem Licht sichtbaren Informationsmusters 6 vollständig übereinstimmen (Figur 2).

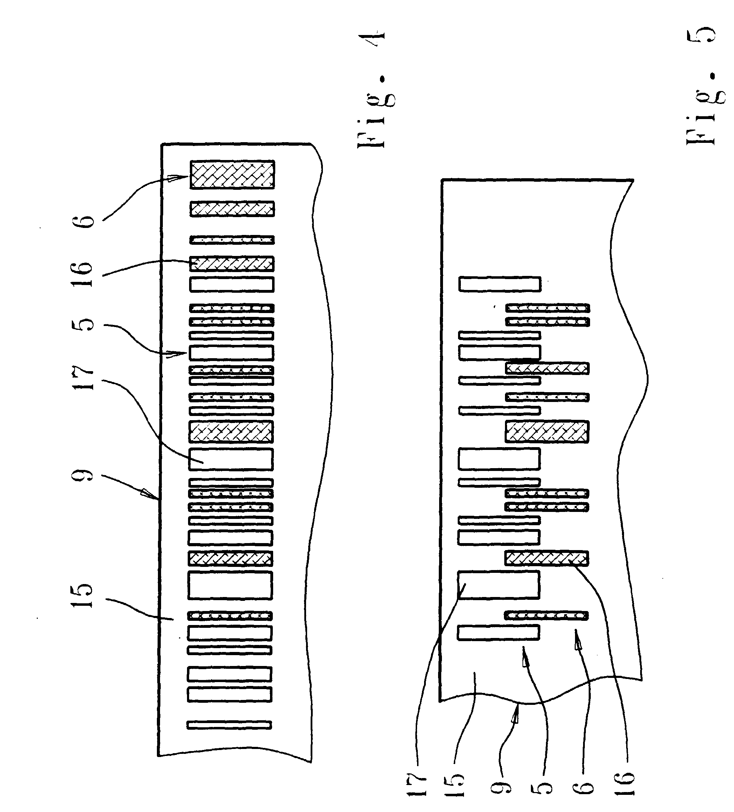

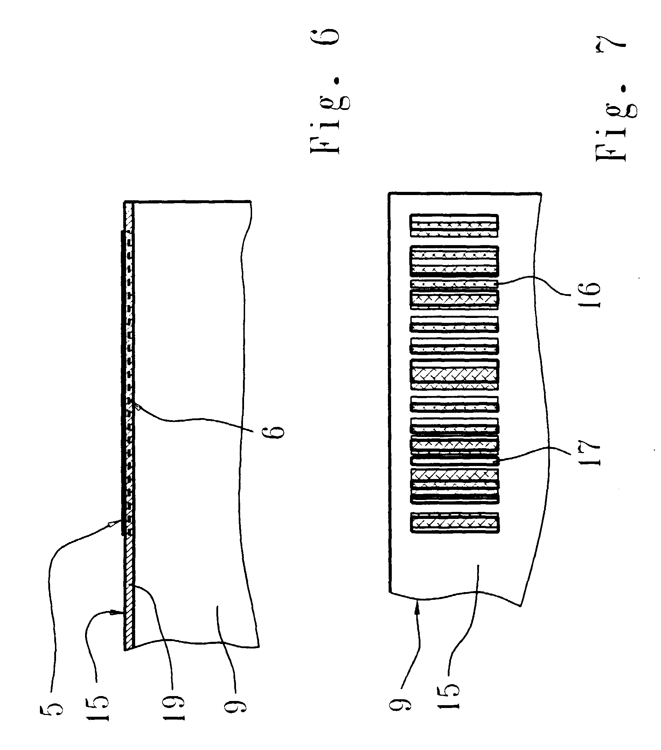

Um den Kennzeichnungsbereich in vorteilhafter Weise flächenmäßig zu verkleinern, können die Muster 5, 6 auch ineinander verschachtelt angeordnet werden, wobei sich die Elemente 16, 17 der Strich-Codierung nicht überlappen. Die Verschachtelung ist in Längsrichtung (Figur 4) oder quer zur Längserstreckung der Muster 5, 6 (Figur 5) sinnvoll.

Darüberhinaus ist eine günstige Verringerung des Markierungsbereichs durch Anordnung der Muster 5, 6 in übereinanderliegenden Ebenen auf der Oberfläche 15 und in der Hülle 19 des zu kennzeichnenden Körpers 9 möglich. Um die Lesbarkeit des nicht sichtbaren Informationsmusters 6 bei einer möglichen flächenmäßigen Überlappung der Code-Elemente 16, 17 zu sichern, weisen die Elemente 17 des Strich-Codes des sichtbaren Musters 5 eine ausreichende Transparenz für das zum Sichtbarmachen des Informationsmusters 6 erforderliche ultraviolette Licht auf. In den Figuren 6 (Schnittansicht) und 7 (Draufsicht) ist diese Form der Anordnung der Muster 5, 6 in schematisierter Form dargestellt.

Die Figuren 8 bis 10 zeigen jeweils als Blockschaltbild die Anordnung der zum Auslesen der auf dem gekennzeichneten Gegenstand 9 vorgesehenen Muster.

Entsprechend der Darstellung in Figur 8 erfolgt das Auslesen der Informationen in einem Lesezyklus. Die Beleuchtungseinrichtung 2 erzeugt ein Licht mit einer Bandbreite, die zwei, auf die einzelnen Muster abgestimmte Wellenlängen (bzw. Frequenzen f₁ und f₂) enthält. Das von der Beleuchtungseinrichtung 2 abgegebene Licht 7 fällt auf den Markierungsbereich des gekennzeichneten Körpers 9 und wird dort reflektiert. Das reflektierte Licht 8 passiert eine optische Strahlaufbereitungs-Einrichtung 3 und wird danach von einem breitbandigen Strahlungsdetektor 4 in elektrische Signale umgewandelt. Das dem Strahlungsdetektor 4 nachgeordnete Doppelfilter 14 trennt die frequenzmäßig den einzelnen Mustern zugeordneten Informationsmengen. Diese werden in der Stufe 12 miteinander verknüpft und in der Auswerte-Einheit 13 angezeigt.

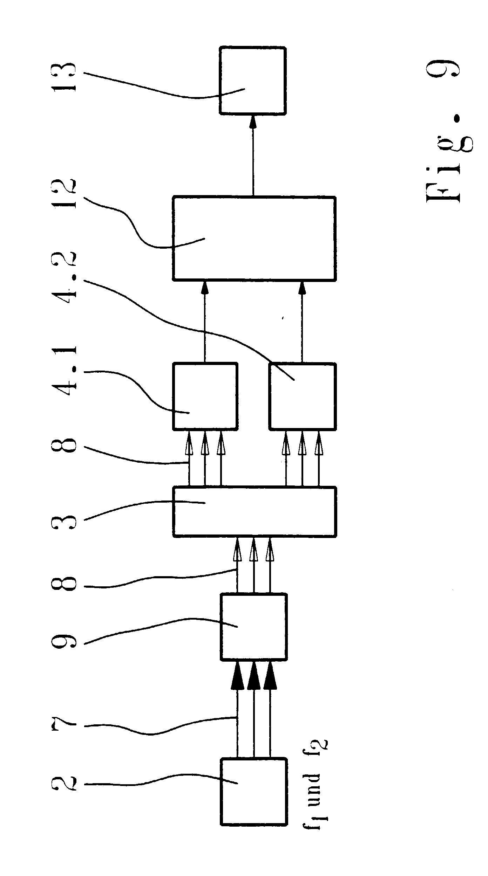

Die Verwendung eines Doppelfilters kann bei Anwendung eines einzigen Lesezyklus entfallen, wenn das reflektierte Licht 8 nach Verlassen der Strahlaufbereitungs-Einrichtung 3 auf zwei Strahlungdetektoren mit Resonanzpunkten der Empfindlichkeit zugeführt wird, die entsprechend auf die Wellenlängen (bzw. Frequenzen f₁ und f₂) der einzelnen Muster abgestimmt sind (Figur 9).

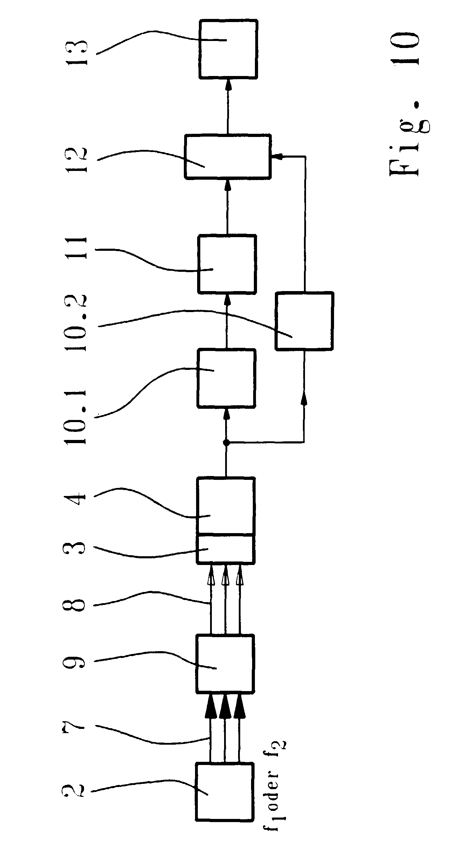

In Figur 10 ist eine Schaltungsanordnung dargestellt, mit der ein Auslesen der Muster in zwei Zyklen erfolgt. Die Beleuchtungseinrichtung 2 ist auf zwei, auf das erste und das zweite Muster abgestimmte Wellenlängenbereiche (λ₁ = 1/f₁ bzw. λ₂ = 1/f₂) umschaltbar. Der Strahlungsdetektor 4 weist eine für beide Wellenlängen ausreichende Empfindlichkeit auf. Die an seinem Ausgang anstehenden, elektrisch äquivalenten Signale werden über die Filter 10.1 und 10.2, deren Resonanzfrequenzen mit f₁ bzw. f₂ übereinstimmen, der Verknüpfungs-Einheit 12 zugeführt und dann in der Auswerte-Einheit 13 zur Anzeige gebracht. Dem Zeittakt der beiden Lesezyklen angepaßt, erfolgt eine Zwischenspeicherung der detektierten Informationssignale des ersten Lesezyklus kurzfristig (für die Dauer des zweiten Lesezyklus) in einem Speicher 11, um zusammen mit den im zweiten Lesezyklus detektierten Signalen in der Verknüpfungs-Einheit 12 weiterverarbeitet zu werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Kennzeichnung eines Gegenstandes mittels zweier, mit optischen Mitteln durch Bestrahlung mit Licht auswertbarer, geometrisch verschlüsselte Informationen enthaltender Muster, bestehend aus einem bei sichtbarem Licht nicht sichtbaren ersten Muster, welches jedoch unter UV-Licht sichtbare verschlüsselte Informationen enthält, und einem bei sichtbarem Licht sichtbaren zweiten Muster, und zum Lesen der Informationen,
**dadurch gekennzeichnet,**
daß die in beiden Mustern enthaltenen Informationen derart verschlüsselt sind, daß deren gemeinsame Auswertung ausschließlich mittels des ersten Musters erfolgen kann, und
daß die beim Auslesen des ersten Musters erhaltenen Signale einer entschlüsselnden Verknüpfung mit den beim Auslesen des zweiten Musters erhaltenen Signalen unterzogen werden.

2. Verfahren nach Anspruch 1, **dadurch gekennzeichnet,** daß das Aufbringen des ersten Musters (6) durch lokale Bestrahlung des zu kennzeichnenden Gegenstands mit kohärenter energiereicher Strahlung mit einer Wellenlänge nahe der Resonanzwellenlänge des Materials des zu kennzeichnenden Gegenstandes (9) und mit derartiger Intensität erfolgt, daß einerseits eine bleibende Markierung entsteht, welche bei Bestrahlung mit Licht entsprechender Wellenlänge eine im Vergleich zur Wirkung des unbestrahlten benachbarten Materials veränderte optische Wirkung im UV-Bereich aufweist und andererseits eine wesentliche bleibende thermisch bedingte Veränderung des Materials des zu markierenden Gegenstands nicht eintritt.

3. Verfahren nach Anspruch 2, **dadurch gekennzeichnet,** daß das Aufbringen des zweiten Musters (5) durch Aufkleben, Bedrucken oder bleibende mechanische Verformung der Oberfläche (15) im Markierungsbereich des zu kennzeichnenden Gegenstandes (9) erfolgt.

4. Verfahren nach einem der vorangehenden Ansprüche, **dadurch gekennzeichnet,** daß zum Auslesen des ersten Musters (6) eine Beleuchtung mit Licht einer Wellenlänge im Bereich der Resonanzwellenlänge des Materials des gekennzeichneten Gegenstandes (9), vorzugsweise mit ultraviolettem Licht, erfolgt.

5. Verfahren nach einem der vorangehenden Ansprüche, **dadurch gekennzeichnet,** daß das zweite und/oder das erste Muster (5, 6) als Strich-Code (16, 17) ausgebildet sind.

6. Verfahren nach einem der vorangehenden Ansprüche, **dadurch gekennzeichnet,** daß die Bestrahlung zum Aufbringen des ersten Musters (6) durch einen Laser mit einer Wellenlänge im Bereich von 250 bis 450 nm erfolgt.

7. Verfahren nach Anspruch 1, **dadurch gekennzeichnet,** daß das zweite Muster (5) seitlich zu dem ersten Muster (6) auf der Außenoberfläche (15) des zu kennzeichnenden Gegenstandes (9) in der gleichen Ebene angeordnet ist.

8. Verfahren nach Anspruch 1, **dadurch gekennzeichnet**, daß beide Muster (5, 6) Strich-Codes aufweisen, und zumindest teilweise ineinander verschachtelt in einer Ebene auf der Oberfläche (15) des zu kennzeichnenden Gegenstandes (9) angeordnet werden.

9. Verfahren nach Anspruch 1, **dadurch gekennzeichnet,** daß das zweite Muster (5) und das erste Muster (6) übereinanderliegend in verschiedenen Ebenen auf der Oberfläche (15) bzw. einer - insbesondere transparenten - Umhüllung (19) des zu kennzeichnenden Gegenstandes (9) angeordnet werden.

10. Verfahren nach Anspruch 1, **dadurch gekennzeichnet,** daß das zweite Muster (5) und das erste Muster (6) einander mindestens teilweise überdecken bzw. geometrisch ineinander verschachtelt angeordnet sind.

11. Verfahren nach einem der vorangehenden Ansprüche, **dadurch gekennzeichnet,** daß das Auslesen der beiden Muster (5, 6) in einem Lesezyklus unter Verwendung einer breitbandigen Beleuchtungseinrichtung (2) und mindestens eines Strahlungsdetektors (4 bzw. 4.1, 4.2) erfolgt.

12. Verfahren nach einem der vorangehenden Ansprüche, **dadurch gekennzeichnet,** daß das Auslesen der beiden Muster (5, 6) in jeweils einem von zwei unmittelbar aufeinanderfolgenden Lesezyklen unter Verwendung einer in ihrer Wellenlänge umschaltbaren Beleuchtungseinrichtung (2) und eines breitbandigen Strahlungsdetektors (4) erfolgt.

13. Verfahren nach einem der Ansprüche 1 bis 12, **dadurch gekennzeichnet,** daß das erste und das zweite Muster (5, 6) mindestens einen übereinstimmenden Informationsanteil aufweisen.

14. Verfahren nach Anspruch 9, **dadurch gekennzeichnet,** daß das obere Muster für Licht im Wellenlängenbereich zum Auslesen des unteren Musters transparent ausgebildet ist.

15. Vorrichtung zur Durchführung des Verfahrens nach einem der vorangehenden Ansprüche,
**gekennzeichnet durch**
- eine Einrichtung zur Erzeugung des zweiten Musters (5),
- eine Strahlungsquelle (1) zur lokalen Bestrahlung des zu kennzeichnenden Gegenstands mit Laserlicht einer Wellenlänge nahe der Resonanzwellenlänge des Materials und mit derartiger Intensität, daß eine bleibende Markierung entsteht, welche bei Bestrahlung mit Licht entsprechender Wellenlänge eine im Vergleich zur Wirkung des unbehandelten benachbarten Materials veränderte optische Wirkung zeigt,
- eine sichtbares Licht abgebende Beleuchtungseinrichtung (2),
- eine Beleuchtungseinrichtung (2), welche eine Lichtwellenlänge nahe der Resonanzabsorptionswellenlänge aufweist, mit der das erste Muster (6) sichtbar gemacht wird,
- ein optisches System (3) zur Ausrichtung der von dem Markierungsbereich (5, 6) des gekennzeichneten Gegenstandes (9) reflektierten Strahlung auf eine Detektionseinrichtung (4),
- eine Detektionseinrichtung (4) mit mindestens einem optischen Strahlungsdetektor (4.1, 4.2) sowie
- der Detektionseinrichtung (4) nachgeschaltete elektronische Mittel (10, 11, 12, 13, 14) zum Filtern, Speichern, Verknüpfen und Auswerten der durch die Detektionseinrichtung (4) aufgenommenen von den Mustern (5, 6) herrührenden Ausgangssignale der Detektionseinrichtung.

16. Vorrichtung nach Anspruch 15, **dadurch gekennzeichnet,** daß die Beleuchtungseinrichtung (2) Licht mit einem breiten Band, zum Auslesen sowohl des sichtbaren zweiten als auch des mit UV-Licht auslesbaren ersten Musters erzeugt.

17. Vorrichtung nach Anspruch 15, **dadurch gekennzeichnet,** daß die Beleuchtungseinrichtung (2) bezüglich des Wellenlängenbereichs des ausgestrahlten Lichts umschaltbar ausgebildet ist.

## Claims

1. A method for marking an object by means of two designs which can be interpreted with optical means by radiant exposure with light and contain geometrically encoded information, consisting of a first design invisible in visible light, which however contains encoded information visible under UV light, and a second design visible in visible light, and for reading the information,
**characterised in that**
the items of information contained in both designs is encoded in such a manner that their joint interpretation can be performed exclusively by means of the first design, and
the signals obtained when reading out the first design are subjected to a decoding operation with the signals obtained when reading out the second design.

2. A method according to Claim 1,
**characterised in that** the application of the first design (6) takes place by local radiant exposure of the object to be marked with coherent high-energy radiation having a wavelength close to the resonance wavelength of the material of the object to be marked (9) and with such intensity that firstly permanent marking is produced, which upon radiant exposure with light of corresponding wavelength displays a changed optical effect in the UV range when compared with the effect of the adjacent material not subject to radiant exposure and secondly a substantial permanent, thermally produced change in the material of the object to be marked does not occur.

3. A method according to claim 2,
**characterised in that** the application of the second design (5) takes place by adhesion, printing or permanent mechanical deformation of the surface (15) in the marking area of the object (9) to be marked.

4. A method according to one of the preceding Claims, **characterised in that** for reading out the first design(6) illumination takes place with light of a wavelength in the range of the resonance wavelength of the material of the object to be marked (9), preferably with ultraviolet light.

5. A method according to one of the preceding Claims, **characterised in that** the second and/or the first designs (5, 6) are designed as bar codes (16, 17).

6. A method according to one of the preceding Claims, **characterised in that** the radiation exposure for the application of the first design (6) is performed by a laser having a wavelength in the range from 250 to 450 nm.

7. A method according to Claim 1,
**characterised in that** the second design (5) is disposed in the same plane and laterally in relation to the first design (6) on the outer surface (15) of the object to be marked (9).

8. A method according to Claim 1,
**characterised in that** both designs (5, 6) have bar codes, and are disposed at least partially interleaved in one plane on the surface (15) of the object to be marked (9).

9. A method according to Claim 1,
**characterised in that** the second design (5) and the first design (6) are disposed one lying on top of the other in different planes on the surface (15) or a - particularly transparent - covering (19) of the object to be marked (9).

10. A method according to Claim 1,
**characterised in that** the second design (5) and the first design (6) at least partially overlap or are disposed geometrically interleaved.

11. A method according to one of the preceding Claims, **characterised in that** the reading of the two designs (5, 6) is carried out in a reading cycle with the use of a broadband illumination device (2) and at least one radiation detector (4 or 4.1, 4.2 respectively).

12. A method according to one of the preceding Claims, **characterised in that** the reading out of the two designs (5, 6) is performed in respectively one of two directly consecutive reading cycles with the use of an illumination device (2) having a switch-selectable wavelength and a broadband radiation detector (4).

13. A method according to one of Claims 1 to 12, **characterised in that** the first and the second designs (5,6) have at least one matching information portion.

14. A method according to Claim 9,
**characterised in that** the upper design is designed to be transparent to light in the wavelength range for the reading out of the lower design.

15. A device for performing the method according to one of the preceding Claims,
**characterised by**
- a device for producing the second design (5),
- a radiation source (1) for the local radiant exposure of the object to be marked with laser light of a wavelength close to the resonance wavelength of the material and having such an intensity that permanent marking is produced, which upon radiant exposure with light of corresponding wavelength displays a changed optical effect when compared with the effect of the untreated, adjacent material,
- an illumination device (2) emitting visible light,
- an illumination device (2), which has a light wavelength close to the resonance absorption wavelength with which the first design (6) is made visible,
- an optical system (3) for aligning the radiation reflected from the marking region (5, 6) of the marked object (9) onto a detection instrument (4),
- a detection instrument (4) having at least one optical radiation detector (4.1, 4.2) and also
- electronic means (10, 11, 12, 13, 14) connected after the detection instrument (4), for filtering, storing, linking and interpreting the output signals of the detection instrument recorded by the detection instrument (4) and originating from the designs (5, 6).

16. A device according to Claim 15,
**characterised in that** the illumination device (2) produces light having a broad band, for reading out both the visible second design and also the first design which can be read out with UV light.

17. A device according to Claim 15,
**characterised in that** the illumination device (2) is constructed so that it can be switched over with respect to the wavelength of the radiated light.

## Revendications

1. Procédé pour caractériser un objet à l'aide de motifs pouvant être exploités à l'aide de moyens optiques par irradiation par une lumière et contenant des informations codées géométriquement, constitué par un premier motif non visible en lumière visible, mais qui contient des informations codées visibles sous l'action d'un rayonnement ultraviolet, et par un second modèle visible en lumière visible, et pour la lecture des informations,
caractérisé en ce
que les informations contenues dans les deux motifs sont codées de telle sorte que leur exploitation commune peut s'effectuer exclusivement à l'aide du second motif, et
que les signaux, obtenus lors de la lecture du premier motif, sont soumis à une combinaison, qui réalise un décodage, avec les signaux obtenus lors de la lecture du premier motif.

2. Procédé selon la revendication 1, caractérisé en ce que l'application du premier motif (6) s'effectue par irradiation locale de l'objet à caractériser, avec un rayonnement cohérent de haute énergie, possédant une longueur d'onde proche de la longueur d'onde de résonance du matériau de l'objet à caractériser (9) et une intensité telle que d'une part il apparaît un marquage permanent, qui, lors de l'irradiation par une lumière ayant une longueur d'onde correspondante, a un effet optique, modifié par rapport à l'effet du matériau voisin non irradié, dans la gamme du rayonnement ultraviolet, et que d'autre part il n'apparaît aucune modification permanente importante, conditionnée de façon thermique du matériau de l'objet à caractériser.

3. Procédé selon la revendication 2, caractérisé en ce que l'application du second motif (5) s'effectue par collage, impression ou déformation mécanique permanente de la surface (15) dans la zone de marquage de l'objet à caractériser (9).

4. Procédé selon l'une des revendications précédentes, caractérisé en ce que pour la lecture du premier motif (6), un éclairement s'effectue avec une lumière ayant une longueur d'onde située au voisinage de la longueur d'onde de résonance du matériau de l'objet à caractériser (9), de préférence avec un rayonnement ultraviolet.

5. Procédé selon l'une des revendications précédentes, caractérisé en ce que le second et/ou le premier motifs (5, 6) sont agencés sous la forme d'un code à barres (16, 17).

6. Procédé selon l'une des revendications précédentes, caractérisé en ce que l'irradiation pour l'application du premier motif (6) est réalisé au moyen d'un laser ayant une longueur d'onde dans la gamme de 250 à 450 nm.

7. Procédé selon la revendication 1, caractérisé en ce que le second motif (5) est disposé latéralement par rapport au premier motif (6) sur la surface extérieure (15) de l'objet à caractériser (9), dans le même plan.

8. Procédé selon la revendication 1, caractérisé en ce que les deux motifs (5, 6) possèdent des codes à barres, et en outre sont disposés en étant au moins partiellement imbriqués l'un dans l'autre dans un plan sur la surface (15) de l'objet à caractériser (9).

9. Procédé selon la revendication 1, caractérisé en ce que le second motif (5) et le premier motif (6) sont disposés en superposition dans des plans différents sur la surface (15) ou sur une enveloppe (19) - notamment transparente - de l'objet à caractériser (9).

10. Procédé selon la revendication 1, caractérisé en ce que le second motif (5) et le premier motif (6) se recouvrent au moins partiellement ou sont disposés en étant imbriqués géométriquement l'un dans l'autre.

11. Procédé selon l'une des revendications précédentes, caractérisé en ce que la lecture des deux motifs (5, 6) s'effectue lors d'un cycle de lecture moyennant l'utilisation d'un dispositif d'éclairement à large bande (2) et d'au moins un détecteur de rayonnement (4 ou 4.1, 4.2).

12. Procédé selon l'une des revendications précédentes, caractérisé en ce que la lecture des deux motifs (5, 6) s'effectue respectivement lors de l'un de deux cycles de lecture directement successifs, moyennant l'utilisation d'un dispositif d'éclairement (2) dont la longueur d'onde est commutable, et d'un détecteur de rayonnement à large bande (4).

13. Procédé selon l'une des revendications 1 à 12, caractérisé en ce que les premier et second motifs (5, 6) possèdent au moins une partie d'information concordante.

14. Procédé selon la revendication 9, caractérisé en ce que le motif supérieur est agencé de manière à être transparent pour la lumière dans la gamme de longueurs d'onde pour la lecture du motif inférieur.

15. Dispositif pour la mise en oeuvre du procédé selon l'une des revendications précédentes,
caractérisé par
- un dispositif pour produire le second motif (5),
- une source de rayonnement (1) pour irradier localement l'objet à caractériser avec une lumière laser ayant une longueur d'onde proche de la longueur d'onde de résonance du matériau et avec une intensité telle qu'il apparaît un marquage permanent qui, lors de l'irradiation avec une lumière ayant une longueur d'onde correspondante, présente un effet optique modifié par rapport à l'effet du matériau voisin non traité,
- un dispositif d'éclairement (2) délivrant une lumière visible,
- un dispositif d'éclairement (2) qui possède une longueur d'onde proche de la longueur d'onde d'absorption à la résonance, avec laquelle le premier motif (6) est rendu visible,
- un système optique (3) pour orienter le rayonnement, qui est réfléchi par la zone de marquage (5, 6) de l'objet à caractériser (9), sur un dispositif de détection (4),
- un dispositif de détection (4) comportant au moins un détecteur optique de rayonnement (4.1, 4.2), et
- des moyens électroniques (10, 11, 12, 13, 14), qui sont branchés en aval du dispositif de détection (4) pour filtrer, mémoriser, combiner et exploiter les signaux de sortie du dispositif de détection (4), qui sont reçus par le dispositif de détection et proviennent des motifs (5, 6).

16. Dispositif selon la revendication 15, caractérisé en ce que le dispositif d'éclairement (2) produit une lumière possédant une large bande, pour la lecture aussi bien du second motif lisible que du premier motif lisible au moyen d'un rayonnement ultraviolet.

17. Dispositif selon la revendication 15, caractérisé en ce que le dispositif d'éclairement (2) est agencé de manière à être commutable en rapport avec la gamme de longueurs d'onde de la lumière émise.
